# EUROPÄISCHE PATENTANMELDUNG

(11) **EP 0 943 920 A2**
(43) Veröffentlichungstag der Anmeldung: **22.09.1999**
(21) Anmeldenummer: 99101952.2
(22) Anmeldetag: 30.01.1999
(51) Int. Cl.: G01P 3/489, G08C 15/00

(54) **Sensoreinrichtung und Verfahren zur Datenübertragung mit einer solchen Sensoreinrichtung**

(30) Priorität: 16.03.1998 DE 19811095
(71) Anmelder: Micronas Intermetall GmbH, 79108 Freiburg (DE)
(72) Erfinder: Hummel, Ulrich Helmut, 79331 Teningen (DE)
(74) Vertreter: Patentanwälte Westphal, Mussgnug & Partner

(57) **Zusammenfassung**

Es wird ein Verfahren und eine Sensoreinrichtung vorgeschlagen zur Übertragung einer Geschwindigkeitsinformation und zusätzlicher Informationen über einen Übertragungskanal. Der Übertragungstakt (A) wird hierfür in Abhängigkeit der von der Sensoreinrichtung (1) erfassten Geschwindigkeit gewählt. Die zusätzlichen Informationen werden als Modulation des Übertragungstakts übertragen.

## Beschreibung

Die Erfindung betrifft ein Verfahren zur Übertragung einer mittels einer Sensoreinrichtung erfassten Geschwindigkeitsinformation sowie zusätzlicher Information über einen gemeinsamen Übertragungskanal nach Maßgabe eines vorgegebenen Übertragungstaktes. Die Erfindung betrifft auch sowie eine Sensoreinrichtung zur Durchführung eines solchen Verfahrens.

Bei Sensoreinrichtungen, die zur Erfassung der Geschwindigkeit eines sich bewegenden Gegenstandes (Drehbewegung oder lineare Bewegungen) dienen und einerseits die Information über die erfasste Geschwindigkeit und andererseits zusätzliche Informationen, wie z. B. Temperatur, Schaltverhalten und Bewegungsrichtung, an ein Steuergerät übertragen, existieren bislang unterschiedliche Möglichkeiten, diese Informationen zu übertragen. Sämtliche Möglichkeiten sind jedoch mit Problemen behaftet.

Die gesamten Informationen, also erfasste Geschwindigkeit und zusätzliche Information, können parallel übertragen werden. Dies erfordert jedoch zusätzliche Leitungen und Anschlüsse an der Sensoreinrichtung. Die zusätzlichen Leitungen und Anschlüsse sind mit Kosten verbunden und führen sowohl bei der Herstellung als auch im Betrieb zu Zuverlässigkeitsprobleme. Die zusätzlichen Leitungen und Kontaktanschlüsse an der Sensoreinrichtung und die damit verbundenen internen Verdrahtungen innerhalb eines Halbleiterchips, in dem solche Sensoreinrichtungen integriert sind, können zu EMI- bzw. EMV-Störungen führen.

Eine andere Möglichkeit, die erwähnten Informationen zu übertragen, besteht darin, ein sehr schnelles, serielles Datenprotokoll vorzusehen. Dies bedeutet, daß die Geschwindigkeitsinformation und die zusätzlichen Informationen hintereinander übertragen werden. Im Vergleich zur parallelen Übertragung sind zwar keine zusätzlichen Leitungen bzw. Kontaktanschlüsse an der Sensoreinrichtung erforderlich. Allerdings muß das Datenprotokoll verhältnismäßig schnell sein, um in vertretbaren Zeitrahmen die gesamten Informationen übertragen zu können.

Eine dritte Möglichkeit zur Lösung des Problems besteht darin, eine sogenannte Multilevel-Analog-Übertragung vorzunehmen. Diese Übertragung der Information erfordert jedoch einen hochgenauen Abgleich der Sensoreinrichtung bzw. eine hochgenaue Messung. Probleme können bei dieser Übertragungstechnik insbesondere dann auftreten, wenn die Sensoreinrichtung starken Temperaturschwankungen unterzogen ist.

Das der Erfindung zugrunde liegende Ziel wird deshalb darin gesehen, ein Verfahren der eingangs genannten Art anzugeben, das im Vergleich zu den bisherigen Übertragungsverfahren wesentlich vereinfacht und weniger störanfällig ist. Das Verfahren soll hierbei eine verhältnismäßig niederfrequente, serielle Datenübertragung über Zweidrahtleitungen zulassen. Weiteres Ziel der Erfindung ist es, eine Sensoreinrichtung anzugeben, die ein solches Übertragungsverfahren zulässt.

Dieses Ziel wird für das Verfahren durch die Merkmale des Anspruchs 1 und für die Sensoreinrichtung durch die Merkmale des Anspruchs 10 gelöst.

Weiterbildungen des erfindungsgemäßen Verfahrens und der erfindungsgemäßen Sensoreinrichtung sind in den Unteransprüchen angegeben.

Die Erfindung beruht im Wesentlichen darauf, daß der Übertragungstakt in Abhängigkeit der von der Sensoreinrichtung erfassten Geschwindigkeit gewählt ist und die zusätzlichen Informationen als Modulation des Übertragungstaktes übertragen werden.

Um den Übertragungstakt in Abhängigkeit der von der Sensoreinrichtung erfassten Geschwindigkeit wählen zu können, wird zweckmäßigerweise auf den von der Sensoreinrichtung zu überwachenden und bewegbaren Gegenstand in regelmäßigen Abständen auf der von der Sensoreinrichtung abtastbaren Seite eine Codeinformation aufgebracht, die von der Sensoreinrichtung zur Geschwindigkeitsmessung abgetastet und ausgewertet wird. Die Codeinformation kann hierbei im einfachsten Fall aus in regelmäßigen Abständen aufgebrachten farbigen Balken auf dem zu bewegenden Gegenstand angeordnet sein. Es sind jedoch auch andere Codeinformationen möglich. Beispielsweise können auch die Zähne und Lücken von Zahnrädern bzw. Zahnstangen als Codeinformation herangezogen werden. Je nachdem, wie schnell sich der zu bewegende Gegenstand bewegt bzw. dreht, bewegen sich die Codeelemente der Codeinformation schneller oder langsamer am Sensor der Sensoreinrichtung vorbei, was von diesem zur Geschwindigkeitsauswertung detektiert wird.

Das aus der Vorbeibewegung der Codeelemente am Sensor der Sensoreinrichtung entstehende Detektionssignal wird vorzugsweise einem Schwellwertentscheider zugeführt, um ein eindeutiges Rechtecksignal aus dem Detektionssignal zu erhalten. Dieses Rechtecksignal dient dann als Übertragungstakt für die zusätzlichen Informationen. Die zusätzlichen Informationen können beispielsweise die Temperatur oder das Schaltverhalten des Sensors betreffen. Als zusätzliche Information kann auch die Bewegungsrichtung an ein Steuergerät übertragen werden. Erfindungsgemäß werden diese zusätzlichen Informationen als Modulation des Übertragungstakts übertragen.

Im einfachsten Fall kann die Modulation durch binäre Datenbits realisiert sein, wobei zwischen den einzelnen Flanken des Übertragungstaktes jeweils ein Datenbit übertragen wird.

Als Sensoren der Sensoreinrichtung eignen sich optische, induktive und magnetische Sensoren. Die Codeinformation bzw. die auf dem zu bewegenden Gegenstand aufgebrachten Codeelemente für die Codeinformation müssen selbstverständlich dem Sensor entsprechend gewählt sein.

In einer besonders bevorzugten Ausführungsform der Erfindung weist die Sensoreinrichtung einen oder mehrere Hallsensoren auf, die bei der Bewegung der Zahnstange oder des Zahnrades die Vorbeibewegung der Zähne und Lücken detektieren. Hierbei werden die aufeinanderfolgend erscheinenden Zahnflanken detektiert und das hieraus resultierende Taktsignal nahezu ohne Zeitverzug an eine Steuereinrichtung übermittelt, welche eine zu den vorbeilaufenden Zahnflanken entsprechenden Übertragungstakt generiert. Bewegen sich die Zähne schnell am Sensor vorbei, ist der Übertragungstakt höher als wenn die Zähne langsamer am Sensor vorbeilaufen. Im einfachsten Fall entspricht der Wechsel der Codeelemente, hier also der Zähne und Lücken, genau dem Übertragungstakt.

Die wesentlichen Vorteile des erfindungsgemäßen Verfahrens sind darin zu sehen, daß als Übertragungskanal eine Zweidrahtleitung einsetzbar ist, also keine zusätzlichen Leitungen oder keine zusätzlichen Anschlußklemmen am Ausgang der Sensoreinrichtung für die Datenübertragung vorgesehen werden müssen. Des Weiteren ist die Datenübertragung mit nur zwei Signalpegeln (Spannung oder Strom) in einfacher Weise möglich.

Eine erfindungsgemäße Sensoreinrichtung zur Durchführung des erläuterten Verfahrens besteht im Wesentlichen darin, daß an Ausgangsklemmen der Sensoreinrichtung ein Datensignal abgreifbar ist, dessen Übertragungstakt ein Maß für die von dem Sensor erfasste Geschwindigkeit des bewegbaren Gegenstandes ist, wobei der Übertragungstakt mit zusätzlicher Information moduliert ist.

Eine solche Sensoreinrichtung kann beispielsweise als monolithisch integrierte Schaltungsanordnnung realisiert sein.

Eine vorzugsweise Verwendung einer solchen Sensoreinrichtung findet in Kraftfahrzeugen zur ABS- (Antiblockiersystem-) Steuerung statt.

Das erfindungsgemäße Verfahren und eine Sensoreinrichtung zur Durchführung des Verfahrens wird nachfolgend in Zusammenhang mit Ausführungsbeispielen anhand von Figuren näher erläutert. Es zeigen:
- Figur 1: eine schematische Darstellung einer Sensoreinrichtung zur Erfassung der Drehgeschwindigkeit eines Rades sowie zusätzlicher Informationen,
- Figur 2: die Sensoreinrichtung von Figur 1 zur Erfassung einer linearen Bewegung einer mit einer Strichcodierung versehenen Stange,
- Figur 3: die Sensoreinrichtung von Figur 1 bzw. 2 zur Erfassung der linearen Bewegung einer Zahnstange,
- Figur 4: ein zu den Figuren 1 bis 3 gehörendes Taktsignal im Beispiel mit zugehörenden Taktflankensignalen,
- Figur 5: eine mögliche Ausführungsform für die Modulation von Datenbits zwischen zwei Taktflankensignalen, und
- Figur 6: ein mögliches Datenprotokoll zur Übertragung der Geschwindigkeitsinformation sowie zusätzlicher Daten bei unterschiedlichen Geschwindigkeiten des bewegbaren Gegenstandes.

In den nachfolgenden Figuren bezeichnen, sofern nichts anderes angegeben, gleiche Bezugszeichen gleiche Teile mit gleicher Bedeutung.

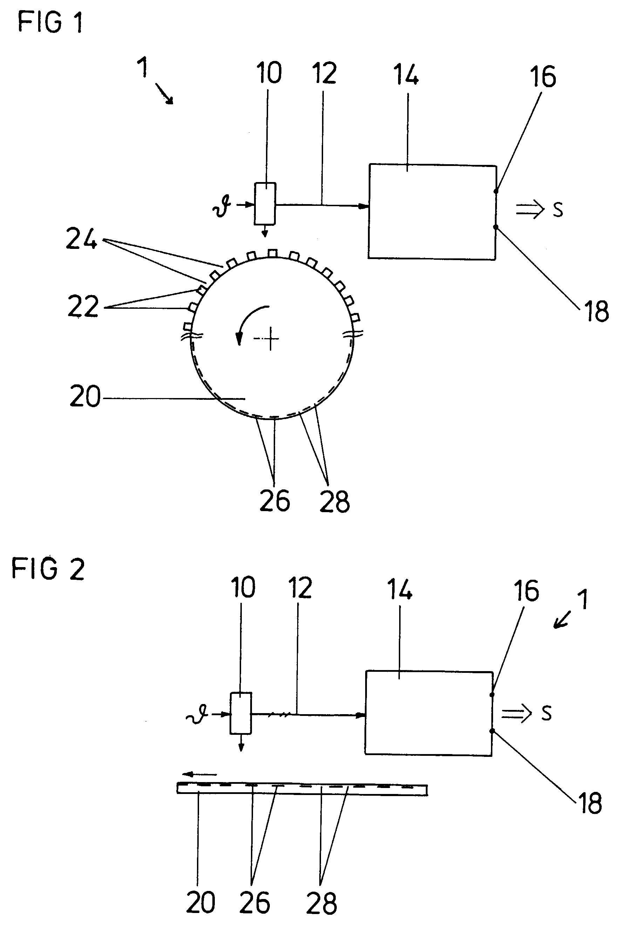

In Figur 1 ist schematisch eine Sensoreinrichtung 1 mit einem Sensor 10 mit über eine Zuleitung 12 nachgeschalteter Elektronik 14 gezeigt. Der Sensor 10 und die Elektronik 14 können beispielsweise als monolithischer, integrierter Schaltkreis realisiert sein. Der Sensor 10 kann ein optischer, ein magnetischer oder induktiver Sensor sein.

Nachfolgend wird beispielhaft davon ausgegangen, daß der Sensor 10 ein Hallsensor ist. Die Sensoreinrichtung 1 verfügt über zwei Ausgangsklemmen 16, 18, die mit einem Steuergerät S verbindbar sind.

Der Sensor 10 ist einem bewegbaren Gegenstand 20, hier einem drehbaren Zahnrad, zugeordnet. Das Zahnrad 20 ist an seinem äußeren Umfang in gleichmäßigen Abständen mit Zähnen 22 versehen, zwischen denen jeweils eine Zahnlücke 24 angeordnet ist. Der Hallsensor 10 erfasst bei einer Drehbewegung des Zahnrades 20 das Vorbeilaufen der Zähne 22 und Lücken 24. Der Zeitabstand zwischen zwei aufeinanderfolgenden Zähnen 22 bzw. Lücken ist ein direktes Maß für die Geschwindigkeit des Zahnrades 20.

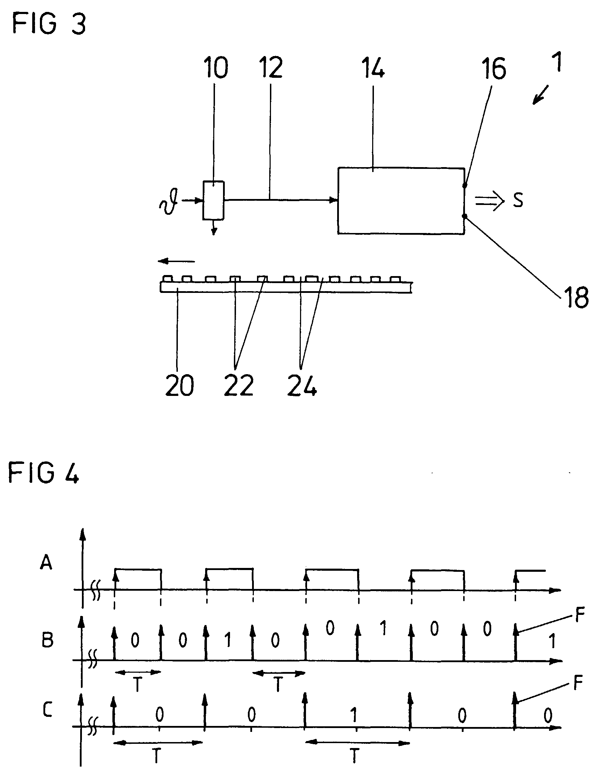

Die Elektronik 14 wertet das Sensorsignal des Sensors 10 aus. Hierbei ist es zweckmäßig, daß dieses Sensorsignal einem Schwellwertentscheider zugeführt wird, um etwaige Störungen zu unterdrücken. Am Ausgang eines solchen, der Einfachheit halber nicht dargestellten Schwellwertentscheiders ist ein Signal abgreifbar, das genau dem Vorbeilaufen der Zähne 22 und Lücken 24 des Zahnrades 20 entspricht. Dieses Signal ist in Figur 4 mit dem Bezugszeichen A dargestellt. Dieses Signal A wird als Übertragungstakt für weitere Informationen, die vom Sensor 10 bereitgestellt werden, verwendet.

Als weitere Informationen können beispielsweise Daten über die Umgebungstemperatur des Sensors 10, dessen Schaltverhalten oder aber auch über die Drehrichtung des bewegbaren Gegenstandes 20 oder andere zu detektierende Größen übertragen werden. Der Einfachheit halber ist nachfolgend davon ausgegangen, daß die zusätzliche Information, die an das Steuergerät S geliefert werden soll, die Umgebungstemperatur ϑ des Sensors 10 ist. Diese Umgebungstemperatur ϑ wird beispielsweise von einem Temperatursensor (nicht dargestellt) erfasst, digitalisiert und an den Ausgangsklemmen 16, 18 der Sensoreinrichtung zur Übertragung in Form eines Digitalwertes bereitgestellt.

Es wird beispielhaft davon ausgegangen, daß der Digitalwert für die Temperatur "001" ist. Jedes einzelne Datenbit dieses Digitalwertes "001" wird nacheinander zwischen jeweils zwei Flanken des Übertragungstaktes A übertragen, wie dies in Figur 4 anhand der Datenübertragungsprotokolle B bzw. C dargestellt ist.

Bei der Datenübertragung gemäß Figur 4B ist davon ausgegangen, daß die Periodendauer T des Übertragungstaktes A durch zwei unmittelbar aufeinanderfolgende Flanken, also eine ansteigende und eine unmittelbar darauf abfallende Flanke bestimmt ist. In Figur 4C wird dagegen davon ausgegangen, daß die Taktflanken F des Übertragungstaktes ausschließlich durch die jeweils ansteigenden Flanken des Übertragungstaktes bestimmt ist. Dies bedeutet, daß die Periodendauer T des Übertragungstaktes A doppelt so groß ist wie bei der Datenübertragung von Figur 4B. Beide Varianten sind jedoch möglich.

Im Zusammenhang mit Figur 1 wurde davon ausgegangen, daß der Sensor 10 ein Hallsensor ist, der das abwechselnde Erscheinen der Zähne 22 und Lücken 24 detektiert. Anstelle eines Hallsensors 10 kann jedoch auch ein optischer Sensor vorgesehen werden, welcher eine optische Markierung am äußeren Umfang des Zahnrades 20 erfasst und hieraus ein Übertragungstaktsignal ableitet, das vorzugsweise direkt proportional zur Drehgeschwindigkeit des Rades 20 ist. Bei einem optischen Sensor 10 können als Codeelemente abwechselnd dunkle Striche 26 und helle Striche 28 vorgesehen sein. Im Übrigen entspricht die Funktionsweise genau der oben dargestellten.

In den Figuren 2 und 3 ist die bereits im Zusammenhang mit Figur 1 erläuterte Sensoreinrichtung 1 erneut dargestellt. Der dortige Sensor 10 dient jedoch im Ausführungsbeispiel von Figur 2 zur Abtastung eines optischen Codes bestehend aus dunklen und hellen Strichen 26, 28, welche auf der Oberseite eines linear bewegbaren Gegenstandes 20 aufgebracht sind.

Im Ausführungsbeispiel von Figur 3 tastet der Sensor 10 die Zähne 22 und Lücken 24 einer bewegbaren Zahnstange 20 ab.

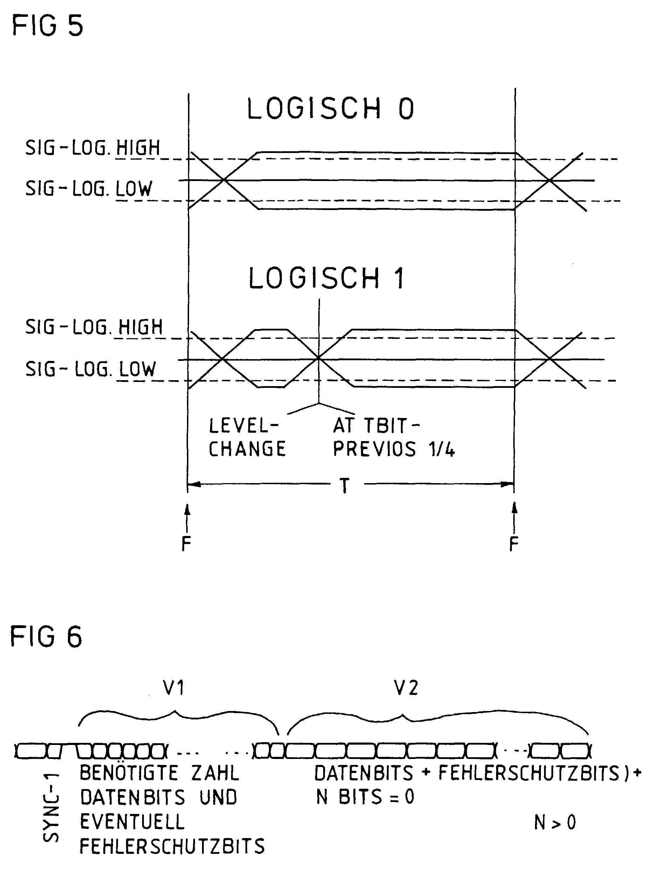

In Figur 5 ist beispielhaft das Datenformat für eine logische "0" und eine logische "1" dargestellt, wie es zwischen zwei aufeinanderfolgenden Taktflanken F vorgegeben sein kann. Die logische "0" ist beispielsweise dadurch gekennzeichnet, daß zwischen zwei aufeinanderfolgenden Taktflanken F lediglich zu Beginn ein Pegelwechsel auftritt und der dann eingenommene Pegel über die restliche Periodendauer T beibehalten bleibt. Die logische "1" ist beispielhaft dadurch gekennzeichnet, daß an einer vorgegebenen Stelle innerhalb der Periode T zwischen zwei Taktflanken F ein weiterer Pegelwechsel stattfindet. Im Ausführungsbeispiel von Figur 5 ist dies bei etwa 1/4 T der Fall. Selbstverständlich sind andere Definitionen von logisch "0" und logisch "1" ebenfalls möglich.

Figur 6 zeigt ein mögliches Datenprotokoll, welches an den Ausgangsklemmen 16, 18 der Sensoreinrichtung 1 zur Verfügung stehen kann, wenn der bewegbare Gegenstand 20 nach einer detektierten Geschwindigkeit V1 langsamer dreht bzw. langsamer weiterbewegt wird. Die langsamere Geschwindigkeit ist mit V2 bezeichnet. Der Beginn der Datenübertragung ist durch ein Synchronisationssignal bzw. durch Synchronisationsbits SYNC-1 bestimmt. Nach den Synchronisationsbits folgen eine benötigte Zahl Datenbits, die evtl. von Fehlerschutzbits gefolgt sind. Die einzelnen Bits werden in Abhängigkeit der von der Sensoreinrichtung 1 erfassten Geschwindigkeit V1 bzw. V2 des bewegbaren Gegenstandes 20 an den Ausgangsklemmen 16, 18 der Sensoreinrichtung zur Verfügung gestellt. Reduziert sich die Geschwindigkeit des Gegenstandes 20, erscheinen die einzelnen Datenbits langsamer, wie anhand des Protokolls von Figur 6 leicht zu erkennen ist. Die Periodendauer T innerhalb der die einzelnen Datenbits zur Verfügung gestellt werden, ist ein direktes Maß für die Geschwindigkeit des bewegten Gegenstandes 20, was in einem Steuergerät in einfacher Weise auswertbar ist.

Der Vollständigkeit halber ist noch zu erwähnen, daß zwar im Zusammenhang mit Figur 1 und Figur 3 eine Zahnstange bzw. ein Zahnrad als bewegbare Gegenstände 20 dargestellt wurden, bei denen die Zähne im Querschnitt Rechteckform haben. Es ist jedoch auch jede andere Flankenform der Zähne denkbar.

### Bezugszeichenliste

- 1: Sensoreinrichtung
- 10: Sensor
- 12: Verbindungsleitung
- 14: Elektronik
- 16: Ausgangsklemme
- 18: Ausgangsklemme
- 20: Scheibe; Rad
- 22: Zahn
- 24: Zahnlücke
- 26: Strich, Balken
- 28: Lücke
- S: Steuergerät
- A: Codesignal
- B: Datenbitfolge
- C: Datenbitfolge
- t: Zeit
- T: Periode
- F: Flanke
- V1: Geschwindigkeit
- V2: Geschwindigkeit
- ϑ: Umgebungstemperatur
- 168:

## Patentansprüche

1. Verfahren zur Übertragung einer mittels einer Sensoreinrichtung (1) erfassten Geschwindigkeitsinformation sowie zusätzlicher Information über einen gemeinsamen Übertragungskanal nach Maßgabe eines vorgegebenen Übertragungstaktes (A),
**dadurch gekennzeichnet,** daß der Übertragungstakt (A) in Abhängigkeit der von der Sensoreinrichtung (1) erfassten Geschwindigkeit (V1; V2) gewählt ist und die zusätzliche Information als Modulation des Übertragungstaktes (A) übertragen wird.

2. Verfahren nach Anspruch 1,
**dadurch gekennzeichnet,** daß die Modulation für die zusätzliche Information als Aufeinanderfolge von einzelnen Datenbits zwischen vorgegebenen Taktflanken (F) des Übertragungstaktes (A) übertragen wird.

3. Verfahren nach Anspruch 1 oder 2,
**dadurch gekennzeichnet,** daß die Sensoreinrichtung (1) einem relativ zur Sensoreinrichtung (1) bewegbaren Gegenstand (20) zugeordnet ist, und daß der Gegenstand (20) mit einer in regelmäßigen Abständen versehenen Codeinformation (22, 24; 26, 28) versehen ist, welche von der Sensoreinrichtung (1) zur Geschwindigkeitsmessung abgetastet wird.

4. Verfahren nach einem der Ansprüche 1 bis 3,
**dadurch gekennzeichnet,** daß der Gegenstand (20) eine Scheibe, ein Rad oder dergleichen, welches in Drehbewegung versetzbar ist, oder ein Gegenstand (20), der in Linearbewegung versetzbar ist, ist wobei die Codeinformation (22, 24; 26, 28) auf einer der Sensoreinrichtung (1) zugewandten Seite den Gegenstand (20) angeordnet ist.

5. Verfahren nach einem der Ansprüche 1 bis 4,
**dadurch gekennzeichnet,** daß die Codeinformation (22, 24; 26, 28) aus in regelmäßigen Abständen auf dem zu bewegenden Gegenstand (20) aufgebrachten und aufeinanderfolgend abwechselnden ersten und zweiten Codeelementen (22, 24; 26, 28) besteht.

6. Verfahren nach Anspruch 5,
**dadurch gekennzeichnet,** daß die Sensoreinrichtung (1) aus der abgetasteten Codeinformation (22, 24; 26, 28) ein digitales Signal der Folge ..... 01010 ..... bildet, und daß aus der Frequenz dieses digitalen Signals die Geschwindigkeit des bewegbaren Gegenstandes (20) errechnet wird.

7. Verfahren nach Anspruch 6,
**dadurch gekennzeichnet,** daß das digitale Signal der Folge ..... 01010 ..... als Übertragungstakt (A) für die zusätzliche Information gewählt ist.

8. Verfahren nach einem der Ansprüche 1 bis 7,
**dadurch gekennzeichnet,** daß auf dem Übertragungskanal als zusätzliche Information der Abstand der Sensoreinrichtung (1) vom bewegbaren Gegenstand (20) und/oder die Umgebungstemperatur der Sensoreinrichtung (1) und/oder die Bewegungsrichtung des Gegenstandes (20) und/oder das Schaltverhalten der Sensoreinrichtung (1) übertragen wird.

9. Verfahren nach einem der Ansprüche 1 bis 8,
**dadurch gekennzeichnet,** daß als Übertragungskanal eine elektrische Leitung eingesetzt wird.

10. Sensoreinrichtung mit einem Sensor (10) zum Erfassen einer Geschwindigkeit eines bewegbaren Gegenstandes (20) und zum Bereitstellen eines die Geschwindigkeit (V1; V2) repräsentierenden Datensignals sowie zusätzlicher Daten an Ausgangsklemmen (16, 18) der Sensoreinrichtung, **dadurch gekennzeichnet,** daß an den Ausgangsklemmen (16, 18) der Sensoreinrichtung (1) ein Datensignal abgreifbar ist, dessen Übertragungstakt (A) ein Maß für die vom Sensor (1) erfasste Geschwindigkeit (V1; V2) ist, wobei der Übertragungstakt (A) mit den zusätzlichen Daten moduliert ist.

11. Sensoreinrichtung nach Anspruch 10,
**dadurch gekennzeichnet,** daß der Sensor (10) ein optischer, magnetischer oder induktiver Sensor (10) ist.

12. Sensoreinrichtung nach Anspruch 10 oder 11,
**dadurch gekennzeichnet,** daß die zusätzlichen Daten als einzelne Datenbits zwischen zwei Taktflanken (F) des Übertragungstaktes (A) an den Ausgangsklemmen (16, 18) abgreifbar sind.

13. Verwendung der Sensoreinrichtung nach einem der Ansprüche 10 bis 12 in einem Kraftfahrzeug zur Erfassung der Drehbewegung von mit einem Antiblockiersystem in Wirkverbindung stehenden Scheiben oder Zahnrädern.
